# EUROPÄISCHE PATENTSCHRIFT

(11) **EP 2 671 626 B1**
(45) Veröffentlichungstag und Bekanntmachung des Hinweises auf die Patenterteilung: **24.10.2018**
(21) Anmeldenummer: 12004241.1
(22) Anmeldetag: 04.06.2012
(51) Int. Cl.: B01D 53/83

(54) **Verfahren zur Reinigung von Abgasen der Müllverbrennung mit einer Rückführung eines Sorbens, die einen Wärmetauscher zur Kühlung des Sorbens umfasst**
Method for cleaning gases from waste incineration with a sorbent recycle comprising a heat exchanger for cooling the sorbent
Méthode de purification de gaz issus de l'incinération de déchets avec recyclage d'un sorbant comprenant un échangeur de chaleur pour refroidir le sorbant

(43) Veröffentlichungstag der Anmeldung: 11.12.2013
(73) Patentinhaber: Hitachi Zosen Inova AG, 8005 Zürich (CH)
(72) Erfinder: Frey, Ruedi, 8307 Effretikon (CH); Halter, Roland, 9230 Flawil (CH); Schneider, Adrian, 8953 Dietikon (CH); Wyss, Roland, 8340 Hinwil (CH)
(74) Vertreter: Schaad, Balass, Menzl & Partner AG

(56) Entgegenhaltungen:
- DE-A1- 3 915 934
- DE-A1- 3 915 934
- DE-C1- 3 628 108
- DE-C1- 3 628 108
- US-A- 5 112 588
- US-A- 5 112 588
- US-A- 5 567 228
- Green D W, Perry R H: "Perry's Chemical Engineer's Handbook", 2008, Mc Graw Hill ISBN: 978-0-07-142294-9 page 17-16,

## Beschreibung

Die vorliegende Erfindung betrifft ein Verfahren zur Reinigung von Abgasen gemäss Oberbegriff des Anspruchs 1.

Bei der Verbrennung von Abfällen, wie beispielsweise Müll, Industrieabfällen und Klärschlamm, entstehen Abgase, die mit umweltbelastenden Substanzen verunreinigt sind. Solche Schadstoffe müssen weitgehend aus den Abgasen entfernt werden, bevor letztere in die Atmosphäre entlassen werden können. Dabei müssen die Abgase einerseits von im Abgas mitgeführten Feststoffen bzw. Staubpartikeln gereinigt werden und andererseits müssen gasförmige Schadstoffe wie HCl, HF, SO₂, Stickoxide und Dioxin aus dem Abgas entfernt werden.

Im Abgas mitgeführte Feststoff-, beziehungsweise Staubpartikel werden gewöhnlich in Zyklonen, Elektrofiltern, Gewebefiltern oder Wäschern abgeschieden. Zur Abtrennung von gasförmigen Schadstoffen werden trockene, quasi-trockene und nasse Reinigungsverfahren eingesetzt.

Ein trockenes oder quasi-trockenes Verfahren zur Abscheidung von Schadstoffen aus Abgasen ist beispielsweise in der DE-A-32 35 559 beschrieben. Bei der trockenen oder quasitrockenen Sorption wird in der Regel ein Sorptionsmittel in einem Reaktor mit dem schadstoffbeladenen Abgas in Kontakt gebracht, wobei die Schadstoffe am Sorptionsmittel absorbiert werden. In Strömungsrichtung der Abgase gesehen stromabwärts ist dem Reaktor üblicherweise ein Feststoffabscheider zugeordnet, in welchem im Abgas mitgeführte Feststoffe und somit auch mit Schadstoff beladenes Sorptionsmittel mindestens teilweise abgeschieden werden.

Als Sorptionsmittel werden bei den obigen Verfahren häufig calciumhaltige, basische Mittel - wie beispielsweise Kalkhydrat (Calciumhydroxid, Ca(OH)₂), Branntkalk (Calciumoxid, CaO) oder Calciumcarbonat (CaCO₃) - zugegeben, die zusammen mit den im Abgas enthaltenen, oftmals sauren Schadstoffen, wie beispielsweise HCl, reagieren.

Als Nachteile der trockenen oder quasi-trockenen Verfahren werden im Stand der Technik oft ein relativ hoher Additivverbrauch oder/und eine relativ geringe Abscheideleistung angeführt. Gemäss der DE-A-4 233 223 sei Ursache dafür eine zu geringe Feuchtigkeit in Abgas und Reaktionsprodukt, die für die Abscheidung prozessbestimmend ist. So ist beispielsweise die Sorption von sauren Schadstoffen wie HCl, HF, SO₂ und SO₃ vom Wassergehalt im Abgas abhängig.

Um den obigen Nachteilen zu begegnen, wird beispielsweise gemäss der EP-B-0 104 335 das teilweise ausreagierte trockene Sorptionsmittel mit dem Abgasstrom in einer weiteren Stufe durch Eindüsen von Wasser angefeuchtet, um das Sorptionsmittel zu reaktivieren.

Des Weiteren ist etwa aus DE-A-3 915 934 bekannt, dass die Abscheideleistung insbesondere für saure Schadstoffe im Abgas durch Erniedrigen der Betriebstemperatur auf unter 170°C verbessert werden kann.

In der EP-A-0 694 328 wird zudem ein Verfahren beschrieben, bei welchem das Abgas vor dem Eintritt in den Reaktor oder im Reaktor durch Mischen mit Wasser auf eine Temperatur von 70°C bis 180°C abgekühlt wird, da bei diesen Temperaturen eine weitgehende Schadstoffabsorption mit einer geringen Sorptionsmittelmenge erreicht wird.

Nachteilig an diesen Verfahren ist allerdings, dass es durch das Eindüsen von Wasser, gerade bei stark hygroskopischen Reaktionsprodukten wie CaCl₂, leicht zu einer Überbefeuchtung oder Vernässung der im Abgas mitgeführten Feststoffe kommen kann. CaCl₂ entsteht häufig bei der Reaktion von HCl mit den oben genannten calciumhaltigen, basischen Sorptionsmitteln wie Ca(OH)₂ und begünstigt aufgrund seiner Hygroskopizität eine Agglomeratsbildung der Feststoffe und unerwünschte Anbackungen derselben an den Reaktorwänden und/oder den Einrichtungen zur Wassereindüsung.

Wie etwa in DE-C-4 333 481 ausgeführt, kann eine solche Überbefeuchtung und Agglomeratsbildung der Feststoffe zu Anbackungen bis hin zu Verstopfungen im Rauchgasweg und somit zu einer massiven Beeinträchtigung der Betriebssicherheit der Anlage führen.

In der DE-C1-3 628 108 wird ein Verfahren zum Entfernen von HF, HCI, SO₂ und SO₃ aus Rauchgasen offenbart, wobei dem Rauchgas vor dem Abscheider Additive, wie z.B. Calciumhydroxid, zugeführt werden. Vor Zugabe in das Rauchgas werden die Additive durch einen Wärmetauscher indirekt bis unter die Wassertaupunkttemperatur herabgekühlt, so dass der die Additivteilchen umgebende Wasserdampf vorübergehend kondensiert und die Additivteilchen befeuchtet. Das Rauchgas wird dadurch dem Abscheider mit einer Temperatur von ca. 200°C zugeführt. Durch die Abkühlung der Additive unter die Wassertaupunkttemperatur besteht jedoch auch hier eine erhöhte Gefahr einer Überbefeuchtung.

Aufgabe der vorliegenden Erfindung ist es somit, ein einfaches Verfahren zur Reinigung von Abgasen bereitzustellen, mit welchem die Nutzung und der Verbrauch des Sorptionsmittels ohne Beeinträchtigung der Betriebssicherheit optimiert werden kann.

Die Aufgabe wird gelöst durch ein Verfahren zur Reinigung von Abgasen mittels eines Sorptionsverfahrens gemäss Anspruch 1. Bevorzugte Ausführungsformen der Erfindung werden in den abhängigen Ansprüchen definiert.

Die vorliegende Erfindung betrifft ein Verfahren zur Reinigung von Abgasen mittels eines Sorptionsverfahrens und wird erfindungsgemäss zur Reinigung von Abgasen aus einer Müllverbrennungsanlage eingesetzt.

Erfindungsgemäss werden die Abgase in einen Reaktor eingeführt und mit einem Sorptionsmittel auf Basis von basischen Alkali- oder Erdalkali-verbindungen zur Sorption von Schadstoffen in Kontakt gebracht. Danach werden die Abgase in einen dem Reaktor in Strömungsrichtung der Abgase stromabwärts zugeordneten Feststoffabscheider geleitet, wo Feststoffpartikel bei einer Temperatur von 130°C bis 150°C aus dem Abgas abgeschieden werden. Die abgeschiedenen Feststoff-partikel werden dann mindestens teilweise in den Reaktor zurückgeführt.

Der Begriff Feststoffpartikel schliesst in diesem Zusammenhang sowohl das Sorptionsmittel mit ein, als auch alle anderen im Abgas mitgeführten Feststoffe, wie z.B. auch Brennstoffpartikel und Flugasche, die aus dem Feuerungsteil der Müllverbrennungsanlage mitgeführt werden. Der Begriff schliesst insbesondere auch Adsorptionsmittel auf mineralischer oder Kohle-Basis, wie z.B. Aktivkohle, Aktivkoks und Zeolithe mit ein, welche eine grosse innere Oberfläche aufweisen.

Gemäss der vorliegenden Erfindung wird nun mindestens ein Teil der in den Reaktor zurückzuführenden Feststoffpartikel vor der Zurückführung gekühlt, indem Wärmeenergie von den Feststoffpartikeln über eine feste Oberfläche mindestens eines Wärmetauscherelements auf ein im Wärmetauscherelement befindliches fluides Kühlmedium übertragen wird. Bevorzugt handelt es sich dabei um ein im Wärmetauscherelement zirkulierendes Kühlmedium.

Im Sinne der vorliegenden Erfindung bedeutet dies, dass Wärmeenergie von einem Medium A (den Feststoffpartikeln) mit höherer Temperatur über eine feste Oberfläche eines Wärmetauscherelements, also indirekt, auf ein Medium B (das Kühlmedium) mit niedrigerer Temperatur übertragen wird. Dadurch, dass der Wärmeübertrag erfindungsgemäss über eine feste Oberfläche stattfindet, kommen die Feststoffpartikel während des Kühlprozesses nicht in direkten Kontakt mit dem Kühlmedium. Dadurch kann wiederum ein Verklumpen der Feststoffpartikel und/oder eine Reaktion der Feststoffpartikel mit dem Kühlmedium vermieden werden. Des Weiteren erlaubt das erfindungsgemässe Verfahren eine Förderung der Feststoffpartikel mittels Luft- oder Gasstrom, während das Kühlmedium in gasförmiger oder in flüssiger Phase vorliegen kann.

Durch die erfindungsgemässe Rückführung von gekühlten Feststoffpartikeln in den Reaktor kommen die gekühlten Feststoffpartikel in Kontakt mit dem heissen Abgas, was eine Temperatursenkung des Abgases zur Folge hat. Beim Austritt aus dem Kessel weisen die Abgase im Reaktor üblicherweise eine Temperatur von ca. 170°C auf. Durch das erfindungsgemässe Verfahren kann nun eine Abkühlung um ca. 20°C bis 60°C erhalten werden. Insgesamt lässt sich also über die Rückführung von gekühlten Feststoffpartikeln die Temperatur im Reaktor und/oder Feststoffabscheider erniedrigen, was wiederum, wie etwa in DE-A-3 915 934 beschrieben, die Abscheidung der Schadstoffe am Sorptionsmittel verbessert.

Überraschenderweise wurde zudem gefunden, dass die Oberfläche der gekühlten Feststoffpartikel, und insbesondere des Sorptionsmittels, beim Eintauchen in den heissen Abgasstrom im Reaktor eine Reaktivierung erfährt. Dies trifft insbesondere dann zu, wenn ein Sorptionsmittel wie Ca(OH)₂ verwendet wird, das mit den Schadstoffen zu stark hygroskopischen Reaktionsprodukten, wie CaCl2, reagiert. Man nimmt an, dass die Reaktivierung durch Bildung eines Kondensationsfilms auf der Feststoffoberfläche zustande kommt, was ein einer deutlichen Verbesserung der Abscheideleistung resultiert.

Die Erfindung erlaubt es somit, die Abgase ohne Eindüsen von Wasser auf eine für die Schadstoffabscheidung optimale Temperatur abzukühlen sowie im Abgas zirkulierendes Sorptionsmittel zu reaktivieren. Dies führt dazu, dass eine optimale Sorptionskapazität des Sorptionsmittels erreicht und somit auch der Verbrauch an Sorptionsmittel minimiert werden kann.

Im Speziellen wird im erfindungsgemässen Verfahren somit auf eine Eindüsung von Wasser verzichtet. Durch den Verzicht auf Wassereindüsung kann zudem die Gefahr einer Überbefeuchtung der Feststoffe beziehungsweise einer Bildung von Anbackungen deutlich reduziert werden, was wiederum zu einer erhöhten Betriebssicherheit beiträgt. Insgesamt ermöglicht das erfindungsgemässe Verfahren somit eine besonders ökonomische, ökologische und sichere Reinigung von Abgasen.

Beim erfindungsgemässen Verfahrens erfolgt die Abscheidung der Feststoffpartikel im Feststoffabscheider bei 130°C bis 150°C, besonders bevorzugt bei ca. 140°C. Der Feststoffabscheider umfasst bevorzugt einen Gewebefilter, in welchem die Feststoffabscheidung erfolgt. Gerade in diesem Temperaturbereich erfolgen die Feststoffabscheidung und die Sorption von Schadstoffen besonders effizient und der Verbrauch an Sorptionsmittel lässt sich dadurch deutlich senken. Anstelle eines Gewebefilters können auch andere filternde Abscheider mit z.B. keramischen Filtermaterialien, elektrostatische Abscheider oder Schwerkraft- beziehungsweise Fliehkraftabscheider (Zyklone) verwendet werden.

Gemäss einer bevorzugten Ausführungsform des erfindungsgemässen Verfahrens erfolgt die Kühlung der Feststoffpartikel in einem Fliessbettkühler, wo die Feststoffpartikel durch Luft oder Reingas fluidisiert, beziehungsweise in Schwebe gehalten werden. Solche Fliessbettkühler sind dem Fachmann bekannt. Sie sind insbesondere vorteilhaft, da durch die Fluidisierluft auch eine Spülung der Feststoffpartikel erhalten wird, indem (unter Umständen feuchte) Abgase verdrängt und somit ein direkter Kontakt des Abgases mit den Wärmetauscherelementen vermieden werden kann.

Die erfindungsgemäss vorhandenen Wärmetauscherelemente können etwa in der Form von Rohrbündeln oder Rohrschlangen vorliegen, in welchen ein Kühlmedium vorhanden ist und vorzugsweise zirkuliert. An den Wärmetauscherelementen wird Wärme von den heissen Feststoffpartikeln über die feste Oberfläche der Wärmetauscherelemente, beispielsweise der Rohrbündel, auf das Kühlmedium übertragen. Der Kühler kann zudem mittels mindestens einer Trennwand in zwei oder mehrere Kühlerabschnitte unterteilt werden, so dass die Feststoffpartikel vom Einlass des Kühlers zum Auslass nach dem Siphonprinzip eine möglichst lange Wegstrecke zurücklegen. Vorzugsweise ist in jeder Kammer ein Wärmetauscherelement, beispielsweise ein Rohrbündel, angeordnet. Diese sind besonders bevorzugt miteinander strömungsverbunden.

Es ist auch denkbar, dass andere bekannte Kühler Anwendung finden. Bekannt sind beispielsweise Schneckenkühler, bei denen das Kühlmedium durch eine das Wärmetauscherelement bildende Förderschnecke und/oder Aussenwand geführt wird. Alternativ oder zusätzlich sind auch andere bekannte Bauformen für Schüttgutkühler denkbar.

Um eine möglichst effiziente Kühlung zu ermöglichen, werden die zu kühlenden Feststoffpartikel bevorzugt entgegen der Strömungsrichtung des Kühlmediums, also nach dem Gegenstromprinzip, geführt.

Das erfindungsgemässe Verfahren erlaubt weiter, dass die auf das Kühlmedium übertragene Wärmeenergie wiederum auf ein weiteres Medium übertragen und somit weiter genutzt werden kann. Diesbezüglich ist es denkbar, dass die Wärmeenergie beispielsweise zum Aufheizen eines Fernwärmewasser-Rücklaufs genutzt wird.

Um das erfindungsgemässe Verfahren besonders energieeffizient zu gestalten, wird als Kühlmedium bevorzugt Kondensat aus dem, dem Fachmann aus konventionellen Müllverbrennungsanlagen bekannten WasserDampf-Kreislauf verwendet.

Wie oben beschrieben, werden beim erfindungsgemässen Verfahren die abgeschiedenen Feststoffpartikel mindestens teilweise in den Reaktor zurückgeführt. Die Menge an in den Reaktor zurückzuführenden Feststoffpartikeln wird dabei bevorzugt über ein Regelorgan, wie beispielsweise einem Schieber, einer Zellradschleuse oder dergleichen, eingestellt.

Gemäss einer bevorzugten Ausführungsform werden abgeschiedene und nicht zurückzuführende Feststoffpartikel direkt aus dem Kühler durch einen Austragungskanal ausgetragen.

Gemäss einer besonders bevorzugten Ausführungsform der Erfindung wird die Temperatur im Reaktor und/oder im Feststoffabscheider über die Menge an zurückzuführenden Feststoffpartikeln und/oder über deren Temperatur eingestellt. Dies kann über das oben genannte Regelorgan sowie über eine Regelung des Durchsatzes des Kühlmediums bewerkstelligt werden.

Zusätzlich zu den zurückgeführten Feststoffpartikeln wird bevorzugt auch frisches Sorptionsmittel in den Reaktor eingeführt. Dabei ist besonders bevorzugt, dass die Menge an zugeführtem frischem Sorptionsmittel in Abhängigkeit der Konzentration mindestens eines Schadstoffs im gereinigten und/oder ungereinigten Abgas geregelt wird.

Alternativ ist bevorzugt, dass die Menge an frischen Sorptionsmittel auch in Abhängigkeit der Konzentration mindestens einer Komponente in den abgeschiedenen Feststoffpartikeln geregelt wird. Dadurch wird bei der Regelung der Zuführung von frischem Sorptionsmittel die Restsorptionskapazität des zurückgeführten Feststoffs berücksichtigt. Dies erlaubt eine genaue Bestimmung der tatsächlich benötigen Menge an frischem Sorptionsmittel und somit eine optimale Ausnutzung des Sorptionsmittels. In der Regel wird dazu eine Analysevorrichtung, insbesondere ein FT-NIR-Spektrometer, verwendet. In dieser Hinsicht wird Bezug genommen auf die europäische Patentanmeldung Nr. 08000447, deren Inhalt hiermit durch Bezugnahme mitaufgenommen wird. Für das
Verfahren der vorliegenden Erfindung wird ein Sorptionsmittel auf Basis von basischen Alkali- oder Erdalkali-verbindungen und vorzugsweise eine Mischung von Chemisorptions- und Adsorptionsmitteln verwendet. Besonders bevorzugt umfasst besagte Mischung ein Chemisorptionsmittel auf der Basis von basischen Alkali- oder Erdalkaliverbindungen zur Neutralisation von sauren Schadstoffen im Abgas sowie ein Adsorptionsmittel auf mineralischer und/oder Kohlenstoffbasis zur Bindung von Schwermetallen wie Quecksilber und organischen Stoffen, z.B. Dioxinen oder Furanen, die im Allgemeinen in Spuren vorliegen. Das Chemisorptionsmittel und das Adsorptionsmittel können separat oder auch als handelsübliche Mischung (z.B. Sorbalit® der Firma Märker) zugeführt werden.

Kalkhydrat (Ca(OH)₂) ist als Sorptionsmittel für die Neutralisation aufgrund seines besonders hohen Sorptionsvermögens und günstigen Preises besonders bevorzugt. Es weist in der Regel eine Reinheit von > 92% sowie eine spezifische Oberfläche im Bereich von 15 m²/g auf und reagiert mit den Schadstoffen SO₂, HCl und HF gemäss den folgenden Reaktionsgleichungen zu den entsprechenden Salzen:

Ca(OH)₂ + H₂O + SO₂ -> CaSO₃ (Calciumsulfit) + 2 H₂O

Ca(OH)₂ + 2 HCl -> CaCl₂ (Calciumchlorid) + 2 H₂O

Ca(OH)₂ + 2 HF -> CaF₂ (Calciumfluorid) + 2 H₂O

Die Temperatur für die Schadstoffabscheidung liegt dabei erfindungsgemäss bei ca. 130°C bis 150°C, besonders bevorzugt bei ca. 140°C.

Erfindungsgemäss kann ein einzelnes Sorptionsmittel oder eine Mischung verschiedener Sorptionsmittel verwendet werden.

Nebst dem beschriebenen Verfahren offenbart die vorliegende Anmeldung auch eine Abgasreinigungs-anlage zur Reinigung von Abgasen mittels des oben beschriebenen Verfahrens.

Besagte Abgasreinigungsanlage umfasst einen Reaktor, welcher in einen Feststoffabscheider zur Abscheidung von Feststoffpartikeln mündet. Die Abgasreinigungsanlage umfasst zudem einen Kühler zur Kühlung der abgeschiedenen, zurückzuführenden Feststoffpartikel sowie Mittel zum geregelten Rückführen von gekühlten Feststoffpartikeln in den Reaktor.

Der Reaktor einer solchen Abgasreinigungsanlage ist bevorzugt ein Wirbelschicht-reaktor oder ein Flugstromreaktor, da diese eine optimale Durchmischung von Abgasen und Sorptionsmittel ermöglichen und dadurch die Sorption von Restschadstoffen aus den Abgasen verbessern.

Im Falle eines Wirbelschichtreaktors liegt das Sorptionsmittel in einer zirkulierenden Wirbelschicht (auch als "zirkulierendes Wirbelbett" bezeichnet) vor, welche dadurch zustande kommt, dass die im Abgas enthaltenen Feststoffpartikel einschliesslich das zugeführte Sorptionsmittel durch die aufwärtsgerichtete Strömung des Abgases in einen Fliesszustand versetzt werden.

Da beim erfindungsgemässen Verfahren auf eine Wassereindüsung in den Reaktor verzichtet werden kann, ist die Verwendung eines Flugstromreaktors besonders bevorzugt, weil sich bei diesem gegenüber einem Wirbelschichtreaktor die Regelung insbesondere des einzuführenden Sorptionsmittels wesentlich einfacher gestaltet. Bei der Verwendung eines Flugstromreaktors beträgt die Geschwindigkeit des Abgases bevorzugt 12 bis 15 m/s.

Wie oben ausgeführt, kann dem Reaktor, in Strömungsrichtung der Abgase gesehen, stromabwärts ein Feststoffabscheider zugeordnet sein. Dieser umfasst bevorzugt einen Gewebefilter, in welchem im Abgas mitgeführte Feststoffe und mit Schadstoff beladenes Sorptionsmittel abgeschieden werden. Anstelle eines Gewebefilters sind diesbezüglich auch andere filternde Abscheider mit z.B. keramischen Filtermaterialien, elektrostatische Abscheider oder Schwerkraftbeziehungsweise Fliehkraftabscheider (Zyklone) denkbar.

Gemäss einer bevorzugten Ausführungsform der erfindungsgemässen Abgasreinigungsanlage umfasst der Kühler einen Fliessbettkühler, in welchem die Kühlung der abgeschiedenen, zurückzuführenden Feststoffe erfolgt. In der Regel ist im Fliessbettkühler ein Austragungskanal angeordnet, welcher vorzugsweise am tiefsten Punkt des Fliessbettkühlers angeordnet ist. Dies erlaubt es, bereits agglomerierte und dadurch sedimentierte Feststoffpartikel aus dem Fliessbettkühler auszutragen.

Es ist insbesondere bevorzugt, dass der Kühler durch mindestens eine nicht durchgehende Trennwand in mehrere strömungsverbundene Kühlerabschnitte unterteilt ist. Dadurch können die Feststoffpartikel im Gegenstromprinzip entlang den Kühlrohren geführt werden, was im Sinne einer optimalen Abkühlung und Wärmerückgewinnung ist.

Die Erfindung bzw. die dadurch erhaltenen Vorteile werden anhand des nachfolgenden konkreten Beispiels einer Müllverbrennungsanlage sowie der anliegenden Figur weiter ausgeführt:

### Beispiel

Eine Müllverbrennungsanlage mit 16 t/h Mülldurchsatz erzeugt üblicherweise rund 82'000 m³N/h Abgas, das am Kesselaustritt in den Reaktor eine Temperatur von ca. 170°C aufweist. Dem Reaktor ist stromabwärts ein Feststoffabscheider zugeordnet, der eine oder mehrere Kammer (n) umfasst und in welchem 62 t/h an Feststoffpartikeln bei einer Temperatur von ca. 140°C abgeschieden werden. Das gereinigte Abgas wird üblicherweise mit einem Saugzug-Gebläse aus dem Feststoffabscheider gefördert.

Zumindest ein Teil der abgeschiedenen Feststoffpartikel wird in einem Fliessbettkühler gekühlt, in welchem die Feststoffpartikel durch Fluidisierluft in der Schwebe gehalten werden. Ein Eindüsen von Fluidisierluft, üblicherweise am Boden des Fliessbettkühlers, bewirkt, dass sich ein Bett aus Feststoffpartikeln bildet, welches sich wie ein Fluid verhält. In diesem Fliessbettkühler sind Rohrschlangen angeordnet, in denen ein Kühlmedium zirkuliert. Die Abkühlung der zurückzuführenden Feststoffpartikel erfolgt indirekt durch Wärmeübertragung der Feststoffpartikel über die feste Oberfläche der Rohrschlangen auf das in den Rohrschlangen zirkulierende Kühlmedium. Die Feststoffpartikel werden dabei im Gegenstrom zum Kühlmedium geführt, um eine maximale Abkühlung der Feststoffpartikel zu erreichen. Der Fliessbettkühler ist mit mehreren nicht durchgehenden Trennwänden ausgestattet, wodurch sich die von den Feststoffpartikel vom Einlass zum Auslass zurückzulegende Strecke nach dem Siphonprinzip verlängert. So werden die zurückzuführenden Feststoffpartikel von einer Temperatur von ca. 140°C auf ca. 84°C abgekühlt, bevor sie in den Reaktor zurückgeführt werden, wo sie das Abgas im Reaktor von ca. 170°C auf ca. 140°C abkühlen. Die Abkühlung im Fliessbettkühler entspricht einer Wärmeleistung von 945 kW und kann dazu genutzt werden, um das Kondensat aufzuheizen. Damit kann die Gesamt-Wärmebilanz der Anlage mit einer thermischen Gesamtleistung von rund 43 MW um ca. 2.2% verbessert werden.

Die Erfindung wird anhand der Figur weiter illustriert. Dabei zeigt rein schematisch:

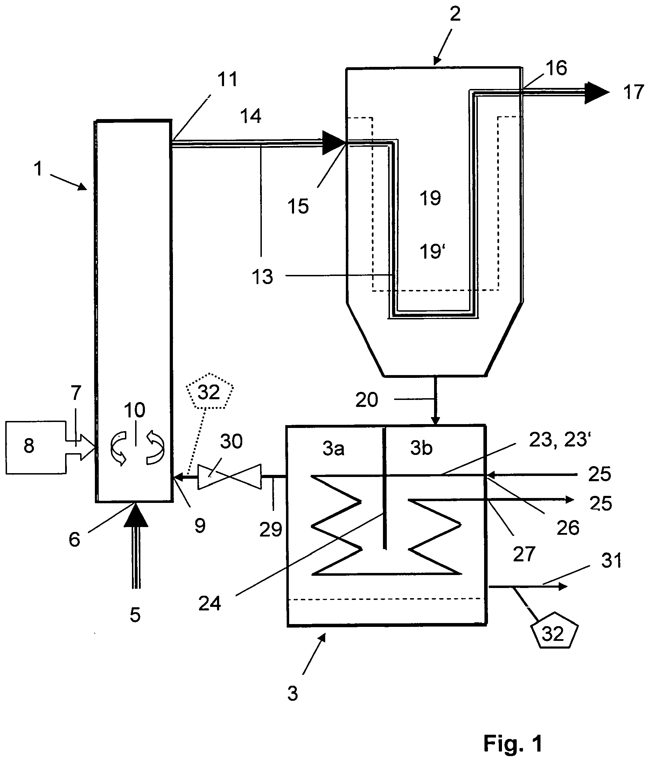

- Fig. 1: eine Abgasreinigungsanlage zur Durchführung des erfindungsgemässen Verfahrens.

Wie in Fig. 1 gezeigt, umfasst die Abgasreinigungsanlage einen Reaktor 1, einen Feststoffabscheider 2, welcher einen oder mehrere Gewebefilter 19' umfasst, sowie einen Kühler 3.

Die bei der Müllverbrennung gebildeten Abgase 5 werden durch einen am unteren Ende des Reaktors 1 befindlichen Abgaseinlass 6 in den Reaktor 1 eingeführt. Die Temperatur der Abgase beträgt dabei in der Regel ungefähr 200°C. Der Reaktor 1 weist stromabwärts des Abgaseinlasses 6 eine Zuleitung 7 für frisches Sorptionsmittel 8 auf. Im unteren Teil des Reaktors 1 ist zudem eine FeststoffEintrittsöffnung 9 für zurückzuführende Feststoffpartikel vorgesehen. Im Eintrittsbereich 10 des Reaktors 1 werden Abgase 5, Sorptionsmittel 8 und zurückgeführte Feststoffpartikel durchmischt.

Im Falle eines Wirbelschichtreaktors wird das Sorptionsmittel von dem in den Wirbelschichtreaktor einströmenden Abgas mitgenommen und bildet mit den im Abgasstrom von der Müllverbrennung mitgeführten Brennstoffpartikeln und der Flugasche eine zirkulierende Wirbelschicht (nicht gezeigt).

Am austrittsseitigen Ende weist der Reaktor 1 eine Öffnung 11 auf, welche in einen Verbindungskanal 14 mündet, der stromabwärts zu dem Reaktor 1 zugeordneten Feststoffabscheider 2 führt. Durch diesen Verbindungskanal 14 werden die Abgase 13 zusammen mit den mitgeführten Feststoffpartikeln vom Reaktor 1 durch einen Einlass 15 in den Feststoffabscheider 2 eingeführt.

Der Feststoffabscheider 2 ist im Wesentlichen in der Form eines Hohlzylinders gestaltet, welcher im oberen Bereich ein Filtersystem 19 zur Abscheidung der im Abgasstrom 13 mitgeführten Feststoffpartikel aufweist und sich auslassseitig trichterförmig verjüngt. Oberhalb des Filtersystems 19 weist der Feststoffabscheider 2 zudem einen Reingasauslass 16 zur Emission des gereinigten Abgases (Reingas) 17 auf. Der Feststoffabscheider besteht aus einer oder mehreren Kammer(n) 19', in denen der feststoffbeladene Abgasstrom von unten oder seitlich durch eingebaute Filterschläuche nach oben strömt und das so erhaltene Reingas 17 durch den Reingasauslass 16 emittiert wird. Die abgeschiedenen Feststoffpartikel sedimentieren am schräg nach unten verlaufenden Boden des Feststoffabscheiders 2 und fliessen in einen Kanal 20.

Der Kanal 20 mündet in den Kühler 3, in dessen Innerem Wärmetauscherelemente 23 in Form von Rohrbündeln 23' angeordnet sind, in welchen ein fluides Kühlmedium 25 zirkuliert. Das Kühlmedium 25 wird über einen in den Kühler 3 führenden Kühlmediumeinlass 26 eingeführt, durch Rohrbündel 23' gefördert und über einen Kühlmediumauslass 27 aus dem Kühler 3 ausgeführt. Der gezeigte Kühler 3 ist über eine nicht durchgehende Trennwand 24 in zwei strömungsverbundene Kühlerabschnitte 3a, 3b unterteilt; die gestrichelte Linie deutet dabei die Lage des Fluidisierbodens im Kühler 3 an. Die Wärmetauscherelemente 23 sind derart ausgestaltet und angeordnet, dass über eine möglichst grosse Oberfläche für den Wärmeaustausch verfügen bzw. einen möglichst grossen Anteil des Raums der Kühlerabschnitte 3a, 3b ausfüllen (was mittels Zickzack-Darstellung angedeutet ist). Die über den Kanal 20 in den Kühler 3 eingeführten Feststoffpartikel werden gekühlt, indem Wärmeenergie der Feststoffpartikel über die feste Oberfläche der Wärmetauscherelemente 23 auf das Kühlmedium 25 übertragen wird. Konkret werden die Feststoffpartikel im Kühler 3 entgegen der Strömungsrichtung des Kühlmediums 25, also im Gegenstromprinzip, mechanisch oder gravimetrisch gefördert (nicht gezeigt), so dass eine Relativbewegung der Feststoffpartikel zur Oberfläche der Wärmetauscherelemente 23 erfolgt. Über einen Rückführkanal 29 werden die Feststoffpartikel aus dem Kühler 3 durch die Feststoffeintrittsöffnung 9 in den Reaktor 1 zurückgeführt. Der Rückführkanal 29 weist ein Regelorgan 30 auf, über welches die Menge an in den Reaktor 1 zurückgeführten Feststoffpartikeln und/oder deren Temperatur eingestellt werden kann. Vom Kühler 3 zweigt des Weiteren ein Austragungskanal 31 ab, welcher über eine Fördereinrichtung (nicht gezeigt) zum Austragen von Feststoff verfügt. Am Austragungskanal 31 oder alternativ am Rückführkanal 29 (mit gestrichelten Linien angedeutet) ist eine Analysevorrichtung 32 zur Bestimmung der Konzentration mindestens eines Bestandteils des rezirkulierten oder ausgetragenen Feststoffs angeordnet. Konkret kann somit der durch den Austragungskanal 31 ausgetragene oder durch den Rückführkanal 29 zurückgeführte Feststoff mithilfe der Analysevorrichtung 32 auf seine Zusammensetzung, insbesondere auf die Konzentration an unverbrauchtem Sorptionsmittel oder an bereits abgeschiedenen Schadstoffen wie Chlorid untersucht werden.

Gemäss einer nicht gezeigten Ausführungsform kann die Analysevorrichtung 32 zur Bestimmung der Konzentration mindestens eines Schadstoffanteils im Abgas und/oder im Reingas auch am Verbindungskanal 14, respektive am Reingasauslass 16 angeordnet sein.

Je nach dem bei der Bestimmung erhaltenen Wert wird die Zuführung an frischem Sorptionsmittel 8 pro Zeiteinheit erhöht, verringert oder konstant gehalten.

## Patentansprüche

1. Verfahren zur Reinigung von Abgasen der Müllverbrennung mittels eines Sorptionsverfahrens, bei welchem die Abgase (5) in einen Reaktor (1) eingeführt und mit einer basischen Alkali- oder Erdalkaliverbindung als Sorptionsmittel (8) zur Sorption von Schadstoffen in Kontakt gebracht werden, in einem dem Reaktor (1) in Strömungsrichtung der Abgase (5, 13) stromabwärts zugeordneten Feststoffabscheider (2) Feststoffpartikel aus dem Abgas (5, 13) abgeschieden werden und die abgeschiedenen Feststoffpartikel mindestens teilweise in den Reaktor (1) zurückgeführt werden, wobei mindestens ein Teil der in den Reaktor (1) zurückzuführenden Feststoffpartikel vor der Zurückführung gekühlt wird, indem Wärmeenergie von den Feststoffpartikeln über eine feste Oberfläche mindestens eines Wärmetauscherelements (23) auf ein im Wärmetauscherelement (23) befindliches fluides Kühlmedium (25) übertragen wird, **dadurch gekennzeichnet, dass** die Abscheidung der Feststoffpartikel im Feststoffabscheider (2) bei 130°C bis 150°C erfolgt.

2. Verfahren gemäss Anspruch 1, **dadurch gekennzeichnet, dass** zusätzlich zu den zurückgeführten Feststoffpartikeln frisches Sorptionsmittel (8) in den Reaktor (1) eingeführt wird.

3. Verfahren gemäss Anspruch 1 oder 2, **dadurch gekennzeichnet, dass** die Kühlung der Feststoffpartikel in einem Fliessbettkühler, Schneckenkühler oder Schüttgutkühler erfolgt.

4. Verfahren gemäss einem der Ansprüche 1 bis 3, **dadurch gekennzeichnet, dass** das fluide Kühlmedium (25) im mindestens einen Wärmetauscherelement (23) zirkuliert.

5. Verfahren gemäss einem der Ansprüche 1 bis 4, **dadurch gekennzeichnet, dass** die zu kühlenden Feststoffpartikel entgegen der Strömungsrichtung des Kühlmediums (25) geführt werden.

6. Verfahren gemäss einem der Ansprüche 1 bis 5, **dadurch gekennzeichnet, dass** die Abscheidung der Feststoffpartikel im Feststoffabscheider (2) mit einer oder mehreren Kammer(n) (19') erfolgt.

7. Verfahren gemäss einem der Ansprüche 1 bis 6, **dadurch gekennzeichnet, dass** die Abscheidung der Feststoffpartikel im Feststoffabscheider (2) bei 140°C erfolgt.

8. Verfahren gemäss einem der Ansprüche 1 bis 7, **dadurch gekennzeichnet, dass** die Temperatur im Reaktor (1) und/oder im Feststoffabscheider (2) über die Menge an zurückzuführenden Feststoffpartikeln und/oder deren Temperatur eingestellt wird.

9. Verfahren gemäss einem der Ansprüche 1 bis 8, **dadurch gekennzeichnet, dass** das Sorptionsmittel (8), eine kalkhaltige Verbindung, insbesondere Kalkhydrat umfasst.

10. Verfahren gemäss einem der Ansprüche 1 bis 9, **dadurch gekennzeichnet, dass** die Menge an zugeführtem frischem Sorptionsmittel (8) in Abhängigkeit der Konzentration mindestens einer Komponente in den abgeschiedenen Feststoffpartikeln geregelt wird.

## Claims

1. A process for purifying off-gases from waste combustion by means of a sorption process in which the off-gases (5) are introduced into a reactor (1) and are brought into contact with a sorbent (8) based on a basic alkali or alkaline earth compound for the sorption of pollutants, in a solids separator (2) that is assigned to the reactor (1) and is downstream in the direction of flow of the off-gases (5, 13), solid particles are separated from the off-gas (5, 13) and the separated solid particles are at least in part returned into the reactor (1),
wherein at least some of the solid particles that are to be returned to the reactor (1) are cooled before the return by transferring heat energy from the solid particles via a solid surface of at least one heat-exchange element (23) to a fluid cooling medium (25) situated in the heat-exchange element (23),
**characterized in that** the solid particles are separated in the solids separator (2) at 130°C to 150°C.

2. The process as claimed in claim 1, wherein, in addition to the returned solid particles, fresh sorbent (8) is introduced into the reactor (1).

3. The process as claimed in claim 1 or 2, wherein the solid particles are cooled in a fluidized-bed cooler, screw cooler or bulk solids cooler.

4. The process as claimed in any one of claims 1 to 3, wherein the fluid cooling medium (25) is circulated in the at least one heat-exchange element (23).

5. The process as claimed in any one of claims 1 to 4, wherein the solid particles that are to be cooled are conducted counter to the flow direction of the cooling medium (25).

6. The process as claimed in any one of claims 1 to 5, wherein the solid particles are separated in the solids separator (2) in one or more chambers (19').

7. The process as claimed in any one of claims 1 to 6, wherein the solid particles are separated in the solids separator (2) at 140°C.

8. The process as claimed in any one of claims 1 to 7, wherein the temperature in the reactor (1) and/or in the solids separator (2) is set via the amount of solid particles that are to be returned and/or the temperature thereof.

9. The process as claimed in any one of claims 1 to 8, wherein the sorbent (8) comprises a lime-containing compound, in particular slaked lime.

10. The process as claimed in any one of claims 1 to 9, wherein the amount of fresh sorbent (8) that is fed is controlled in dependence on the concentration of at least one component in the solid particles that are separated off.

## Revendications

1. Méthode de purification de gaz de rejet issus de l'incinération de déchets au moyen d'un procédé de sorption dans lequel les gaz de rejet (5) sont introduits dans un réacteur (1) et sont mis en contact avec un composé alcalin ou alcalino-terreux basique en tant qu'agent de sorption (8) pour la sorption de polluants, des matières solides sont séparées des gaz de rejet (5, 13) dans un séparateur de matières solides (2) associé au réacteur (1) et situé en aval par rapport à la direction d'écoulement des gaz de rejet (5, 13) et les matières solides séparées sont au moins en partie retournées dans la réacteur (1),
au moins une partie des matières solides qui doivent être retournées dans le réacteur (1) sont refroidies avant le retour en transférant de la chaleur des matières solides au moyen d'une surface solide d'au moins un élément d'échange de chaleur (23) à un agent fluide de refroidissement (25) situé dans un élément d'échange de chaleur (23) ,
**caractérisée en ce que** les matières solides sont séparées dans le séparateur de matières solides (2) à 130°C jusqu'à 150°C.

2. Méthode selon la revendication 1, **caractérisée en ce qu'**en plus des matières solides retournées, de l'agent de sorption (8) frais est introduit dans le réacteur (1).

3. Méthode selon la revendication 1 ou 2, **caractérisée en ce que** les matières solides sont refroidies dans un refroidisseur à lit fluidisé, une vis réfrigérante ou un refroidisseur de matériau en vrac.

4. Méthode selon l'une quelconque des revendications 1 à 3, **caractérisée en ce que** l'agent fluide de refroidissement (25) circule dans le au moins un élément d'échange de chaleur (23).

5. Méthode selon l'une quelconque des revendications 1 à 4, **caractérisée en ce que** les matières solides qui sont à refroidir sont conduites à l'encontre de la direction d'écoulement de l'agent de refroidissement (25).

6. Méthode selon l'une quelconque des revendications 1 à 5, **caractérisée en ce que** les matières solides sont séparées dans le séparateur de matières solides (2) dans une ou plusieurs chambres (19').

7. Méthode selon l'une quelconque des revendications 1 à 6, **caractérisée en ce que** les matières solides sont séparées dans le séparateur de matières solides (2) à 140°C.

8. Méthode selon l'une quelconque des revendications 1 à 7, **caractérisée en ce que** la température dans le réacteur (1) et/ou dans le séparateur de matières solides (2) est réglée en fonction de la quantité de matières solides qui est à retourner et/ou la température de celles-ci.

9. Méthode selon l'une quelconque des revendications 1 à 8, **caractérisée en ce que** l'agent de sorption (8) comprend un composé calcaire, en particulier de l'hydrate de chaux.

10. Méthode selon l'une quelconque des revendications 1 à 9, **caractérisée en ce que** la quantité d'agent de sorption (8) frais qui est amené est réglée en fonction de la concentration d'au moins un composant dans les matières solides séparées.
